(19) Europäisches Patentamt / European Patent Office / Office européen des brevets

(11) **EP 3 851 551 A1**

(12) **EUROPÄISCHE PATENTANMELDUNG**

(43) Veröffentlichungstag:
**21.07.2021 Patentblatt 2021/29**

(51) Int Cl.:
*C22C 38/00* (2006.01)    *B22F 3/105* (2006.01)
*B22F 3/24* (2006.01)    *B22F 5/00* (2006.01)
*B22F 9/08* (2006.01)    *B33Y 10/00* (2015.01)
*B33Y 40/20* (2020.01)    *B33Y 70/00* (2020.01)
*B33Y 80/00* (2015.01)    *C22C 38/02* (2006.01)
*C22C 38/22* (2006.01)    *C22C 38/38* (2006.01)
*C22C 38/44* (2006.01)    *C22C 38/58* (2006.01)

(21) Anmeldenummer: 20152725.6

(22) Anmeldetag: **20.01.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Deutsche Edelstahlwerke Specialty Steel GmbH & Co. KG 58452 Witten (DE)**

(72) Erfinder:
• **Mohr, Andreas**
  **45131 Essen (DE)**

• **Hill, Horst**
  **47929 Grefrath (DE)**
• **Conrads, Janosch**
  **45968 Gladbeck (DE)**
• **Hoeren, Karlheinz P. J.**
  **47798 Krefeld (DE)**

(74) Vertreter: **Cohausz & Florack Patent- & Rechtsanwälte Partnerschaftsgesellschaft mbB Bleichstraße 14 40211 Düsseldorf (DE)**

(54) **METALLPULVER FÜR EIN ADDITIVES FERTIGUNGSVERFAHREN, VERWENDUNGEN DES METALLPULVERS, VERFAHREN ZUR HERSTELLUNG EINES BAUTEILS UND BAUTEIL**

(57) Die Erfindung betrifft ein zur Verwendung in einem additiven Fertigungsverfahren vorgesehenes Metallpulver, das aus Stahlpartikeln besteht, die einen mittleren Durchmesser von 5 - 150 $\mu$m aufweisen und aus, in Masse-%, , C: 0,15 - 1,0 % , N: 0,15 - 1,0 % , , Si: 0,1 - 2,0 %, Mn: 10 - 25 %, Cr: 5 - 21 %, Mo: 0,1 - 3,0 %, Ni: $\leq$ 5 %, Rest Eisen und unvermeidbaren Verunreinigungen, bestehen, wobei das Metallpulver eine gemäß DIN EN ISO 4490 bestimmte Durchflussrate von weniger als 30 sec/50 g aufweist. Mit einem erfindungsgemäßen Metallpulver lassen sich durch additive Fertigung zuverlässige hochbelastbare Bauteile erzeugen. Dementsprechend ist ein erfindungsgemäßes Metallpulver besonders zur Herstellung von Maschinenelementen, die hohen Belastungen ausgesetzt werden, und von medizinischen Bauelementen geeignet, die im oder am menschlichen oder tierischen Körper eingesetzt werden. Die Erfindung stellt auch ein Verfahren zur Verfügung, welches es zuverlässig erlaubt, aus erfindungsgemäßem Metallpulver Bauteile mit optimierten mechanischen Eigenschaften auf Basis eines additiven Fertigungsverfahren zu fertigen.

**Beschreibung**

Die Erfindung betrifft ein Metallpulver zur Verwendung in einem additiven Fertigungsverfahren und bestehend aus Stahlpartikeln. Ebenso betrifft die Erfindung Verwendungen eines solchen Metallpulvers, ein Verfahren, bei dem unter Anwendung eines additiven Fertigungsverfahrens ein Bauteil aus einem derartigen Metallpulver gefertigt wird und ein Bauteil, das durch Anwendung eines additiven Fertigungsverfahrens hergestellt ist.

Wenn nachfolgend "%"-Angaben zu Legierungen oder Stahlzusammensetzungen gemacht werden, so beziehen diese sich jeweils auf die Masse (Angabe in "Masse-"), soweit nicht ausdrücklich etwas anderes genannt ist.

Die Anteile bestimmter Bestandteile des Gefüges eines Stahlzwischenprodukts oder eines Stahlbauteils sind im vorliegenden Text in Volumen-% angegeben, soweit nicht ausdrücklich etwas anderes genannt ist. Die Bestimmung der Anteile der Bestandteile des Gefüges erfolgt mittels Röntgendiffraktometrie, wobei die Auswertung der Gefügeanteile nach der Rietveld-Methode durchgeführt wird.

Sämtlich der im vorliegenden Text angegebenen mechanischen Eigenschaften Zugfestigkeit Rm, Streckgrenze Rp, Bruchdehnung A5,65 werden, soweit nicht anders angegeben, gemäß DIN 50125 bestimmt.

Die im vorliegenden Text angegebenen Werte zur Kerbschlagarbeit und Kerbschlagzähigkeit werden gemäß DIN EN 10045 bestimmt.

Nichtrostende austenitische Stähle finden, insbesondere aufgrund ihrer guten Verformbarkeit und sehr guten Korrosionseigenschaften, ein breites Anwendungsspektrum innerhalb des klassischen Maschinenbaus und der Medizintechnik. Ein wichtiger Vertreter dieser Stähle ist der unter der Werkstoffnummer 1.4404 in der StahlEisen-Liste normierte Stahl X2CrNiMo17-12-2, der gemäß DIN EN 10088-3 aus, in Masse-%, bis zu 0,03 % C, bis zu 1,00 % Si, bis zu 2,00 % Mn, 16,5 - 18,5 % Cr, 2,0 - 2,5 Mo und 10,0 - 13,0 % Ni, Rest Eisen und unvermeidbaren Verunreinigungen besteht.

Das Legierungskonzept, welches nichtrostenden, austenitischen Stählen zu Grunde liegt, muss die Korrosionsbeständigkeit des Werkstoffes gewährleisten. Dies wird insbesondere durch Zugabe von Chrom ("Cr") erreicht. Bei Gehalten von mehr als 12 Masse-% Cr bildet sich eine Chromoxidschicht auf dem aus dem Stahl geformten Bauteil, welche Korrosionsreaktionen unterbindet. Diese Chromoxidschicht kann durch das Element Molybdän ("Mo") weiter stabilisiert werden. Dabei führt die Anwesenheit von Mo in der Stahllegierung insbesondere zu einer erhöhten Beständigkeit gegen Lochkorrosion.

Allerdings können Cr und Mo nur dann zur Korrosionsbeständigkeit beitragen, wenn beide Elemente gelöst in der Metallmatrix vorliegen. Aus diesem Grund ist bei nichtrostenden austenitischen Stählen der Gehalt an Kohlenstoff ("C") auf höchstens 0,030 Masse-% und der Gehalt an Stickstoff ("N") auf höchstens 0,011 Masse-% beschränkt. Andernfalls würde die Gefahr bestehen, dass sich Chromkarbide oder Chromnitride bilden, die zu einer lokalen Verarmung der Metallmatrix des Stahles führen würden.

Kritisch für die technische Anwendung wirkt sich in der Praxis vor allem aus, dass sich Chromkarbide bevorzugt entlang von Korngrenzen ausscheiden. Dieser Vorgang führt zur interkristallinen Korrosion, die bei technischen Anwendungen meist zu einem kompletten Versagen des aus dem jeweiligen Stahl gefertigten Bauteils führt, wie beispielsweise in "Eisenwerkstoffe - Stahl und Gusseisen", H. Berns, W. Theisen, DOI: 10.1007/978-3-540-79957-3, Springer Verlag, erläutert.

Jedoch kann Kohlenstoff nicht allgemein als kritisches Element bei nichtrostenden Austeniten eingestuft werden. C und N können auch vielmehr als interstitielle Elemente genutzt werden, um die Eigenschaften von Austeniten zu steigern. So können auch diese Elemente im gelösten Zustand zur Korrosionsbeständigkeit beitragen. Dieser Beitrag kann anhand der so genannten MARC-Gleichung

$$\mathrm{MARC} = [\%Cr] + 3{,}3 * [\%Mo] + 20 * [\%N] + 20 * [\%C] - 0{,}5 * [\%Mn] - 0{,}25 * [\%Ni]$$

abgeschätzt werden (MARC = measure of alloying for resistance to corrosion), die die Einflüsse der sich in Bezug auf die Korrosionsbeständigkeit positiv (Cr, Mo, N, C) und negativ (Mangan ("Mn"), Nickel ("Ni")) auswirkenden Elemente berücksichtigt.

Darüber hinaus erhöhen C und N stärker als substituierte Elemente die Festigkeit von austenitischen Stählen durch Mischkristallverfestigung. An diesem Effekt setzen die sogenannten "C+N legierten nichtrostende austenitischen Stähle" an, welche einen hohen Anteil an interstitiell gelösten Atomen aufweisen. Ein Beispiel für eine Legierungsvorschrift eines solchen Stahls ist in der DE 101 46 616 A1 veröffentlicht worden. Sie sieht vor, dass ein nichtrostender austenitischer Stahl aus, in Masse-%, 12 - 15 % Cr, 17 - 21 % Mn, < 0.7 % Si, in Summe 0,4 - 0,7 % C und N, und als Rest aus Eisen und herstellungsbedingt unvermeidbaren Verunreinigungen besteht, deren Gehalt in Summe auf weniger als 1,0 % beschränkt ist. Dabei gilt für das aus dem jeweiligen C-Gehalt %C und dem jeweiligen N-Gehalt %N gebildete Verhältnis %C/%N: 0,6 < %C/%N < 1,0. Derart zusammengesetzte Stähle weisen im lösungsgeglühten Zustand deutlich höhere Festigkeiten auf als die konventionellen nichtrostenden austenitischen Stähle, zu denen der oben schon erwähnte Stahl mit der Werkstoffnummer 1.4404 gehört.

Den Vorteilen der verbesserten mechanischen Eigenschaften von C+N-legierten, nicht rostenden austenitischen Stähle steht die geringe Löslichkeit von N im schmelzflüssigen Eisen ("Fe") gegenüber, die ein Zulegieren von N erschwert. Eine Möglichkeit, dennoch Stähle mit erhöhtem N-Gehalt zu erzeugen, besteht im sogenannten "Druckaufsticken der Schmelze". Das Druckaufsticken wiederum benötigt spezielle Ofentechnologien, welche die Erschmelzung des Stahls unter einem Druck erlauben, bei denen die erforderliche Stickstoffmenge in der Schmelze gelöst wird (s. beispielsweise EP 1 196 642 B1).

Durch die Zugabe von Mn kann die N-Löslichkeit einer Schmelze erhöht werden. Höhere Mn-Gehalte ermöglichen daher die Herstellung von Stählen mit hohen N-Gehalten unter Atmosphärendruck. Zudem sind sowohl Mn als auch N starke Austenitstabilisatoren, wodurch in Stählen, die hohe Mn- und N-Gehalte aufweisen, das teure Legierungselement Nickel ("Ni") nicht mehr oder nur noch im begrenzten Umfang als Austenitstabilisator benötigt wird.

C+N legierte austenitische Stähle weisen somit folgende Vorteile gegenüber herkömmlichen nichtrostenden austenitischen Stählen auf, bei denen nur minimierte Gehalte an N und C vorgesehen sind:

- Höhere Festigkeit durch einen hohen Anteil an den interstitiell gelösten Atomen C und N (Mischkristallverfestigung).

- Höhere Neigung zur Kaltverfestigung der Legierungen durch die interstitiell gelösten Atome.

- Höhere Korrosionsbeständigkeit durch einen hohen Anteil an den interstitiell gelösten Atomen C und N.

- Niedrigere Legierungskosten aufgrund der Substitution von Ni durch Mn.

- Möglichkeit der Anwendung im Bereich der Medizintechnik aufgrund der Substitution von Ni durch Mn (Vermeidung von Nickelallergien).

Den Versuchen, die voranstehend erläuterten, C+N legierten austenitischen Stähle industriell auf der konventionellen schmelzmetallurgischen Herstellungsroute zu nutzen, steht gegenüber, dass bei der Abkühlung von aus derartigen Stählen gegossenen Gussvorprodukten, wie Blöcken, Brammen oder desgleichen, unvermeidbar Chromkarbide in dem betreffenden Gussvorprodukt entstehen, welche sich auch hier ungünstig auf die Korrosionsbeständigkeit auswirken. Um dennoch eine ausreichende Korrosionsbeständigkeit zu gewährleisten, müssen die Stähle im Laufe ihrer Verarbeitung einer Lösungsglühung unterzogen werden, um die Chromkarbide aufzulösen. Die dazu erforderlichen Glühtemperaturen liegen allerdings oberhalb von 1100°C und können in der Praxis nur mit Hilfe von speziellen Wärmebehandlungsöfen realisiert werden. Ein weiteres Problem der konventionellen Herstellungsroute besteht darin, dass insbesondere dicke Querschnitte nicht ausreichend schnell genug abgekühlt werden können, um eine erneute Chromkarbidbildung zu vermeiden.

Hinzukommt, dass die mit hohen C+N-Gehalten versehenen, austenitischen Stähle aufgrund einer starken Neigung zur Kaltverfestigung bei Raumtemperatur nur schwer bis gar nicht umgeformt oder bearbeitet werden können. Stattdessen müssen sie warmumgeformt werden, wobei die dazu erforderlichen Temperaturen wiederum so hoch sind, dass es bei der Abkühlung des jeweils warmgeformten Bauteils erneut zur Bildung von unerwünschten Chromkarbiden kommen kann. Dies schränkt die für die Warmformgebung möglichen Bearbeitungstemperaturen und die möglichen Umformgrade stark ein, mit denen die Stähle warmverformt werden können. Darüber hinaus entfällt bei Warmformgebung die Möglichkeit, die mechanischen Eigenschaften von C+N-legierten austenitischen Stählen durch Kaltverfestigung zu optimieren. Dies führt dazu, dass insbesondere bei der Herstellung von filigran geformten Bauteilen ein großer Nachbearbeitungsaufwand anfällt oder dass Bauteile nicht aus derartigen Stählen hergestellt werden können, an deren Festigkeit besondere Anforderungen gestellt werden.

Eine Alternative zur konventionellen schmelzmetallurgischen Herstellroute stellt die Pulvermetallurgie dar, mit der endkonturnahe Bauteile erzeugt werden, indem Metallpulver beispielsweise durch Verpressen in die gewünschte Form gebracht und anschließend durch einen Sinterprozess verdichtet wird. An erster Stelle werden hierfür wasserverdüste Metallpulver verwendet, da sich diese aufgrund der kantigen, durch vorstehende Zacken und desgleichen geprägte Form der Pulverpartikel gut zu einem Rohbauteil verpressen lassen und so ohne zusätzliche Hilfsmittel die benötigte Formstabilität des Rohbauteils ermöglichen.

Hinzukommt, dass beispielsweise in der Veröffentlichung "Characterization of the surface of Fe-19Mn-18Cr-C-N during heat treatment in a high vacuum - An XPS study", K. Zusmande et al, Materials Characterization, Vol. 71 (2012), 66-76, aufgezeigt worden ist, dass bei gasverdüsten Pulvern Manganoxide auf der Partikeloberfläche vorhanden sein können. Diese Manganoxide wirken wie eine Diffusionssperre und führen dazu, dass die solche MnO-Oxide an der Oberfläche ihrer Pulverpartikel aufweisenden Metallpulver für ein konventionelles Sintern unbrauchbar sind.

Eine weitere Möglichkeit der Verdichtung von Metallpulvern, die aus einem mit C+N legierten austenitischen Stahl der hier in Rede stehenden Art bestehen, stellt das Heiß-Isostatische-Pressen ("HIP") dar. Dieses Verfahren ermöglicht es, das Metallpulver trotz Oxidbelegungen bis zur theoretischen Dichte zu kompaktieren. Untersuchungen, von denen beispielsweise in der Veröffentlichung "Surface Oxide Transformation during HIP of Austenitic Fe-19Mn-18Cr-C-N PM steel", E. Hryha et al, Proceedings of 11-th International Conference on Hot Isostatic Pressing, 9-13 June 2014, Stockholm, Sweden, berichtet worden ist, haben jedoch gezeigt, dass die Oxidbelegungen der Pulverpartikel die mechanischen Eigenschaften, insbesondere die Zähigkeit, eines aus derartigen Metallpulvern erzeugten Bauteils auch dann negativ beeinflussen, wenn das Metallpulver durch Heiß-Isostatisches-Pressen verdichtet worden ist. Ein weiterer Nachteil des Heiß-Isostatischen-Pressens besteht darin, dass für eine endkonturnahe Fertigung komplex geformte Kapseln benötigt werden, in denen das Metallpulver verpresst wird. Dies schränkt die Möglichkeit einer technisch und wirtschaftlich sinnvollen Nutzung des Heiß-Isostatischen-Pressens ein. Ebenso bringt die beim Heiß-Isostatischen-Pressen in einer Kapsel erfolgende Formgebung des Bauteils geringe Abkühlraten mit sich, so dass im Bauteil bei der Abkühlung nach dem Heiß-Isostatischen-Pressen wiederum unerwünschte Chromkarbide entstehen können. Diese müssten erneut durch eine nachgeschaltete Wärmebehandlung in Lösung gebracht werden, so dass hier dieselben Probleme auftreten wie bei der voranstehend erläuterten konventionellen Erzeugung.

Die voranstehend skizzierten Nachteile der bekannten Verfahren zur endkonturnahen Fertigung von Bauteilen können durch Verfahren der additiven Fertigung umgangen werden.

Unter dem Begriff "additive Fertigungsverfahren" werden hier alle Herstellverfahren zusammengefasst, bei denen ein Werkstoff zur Erzeugung eines Bauteils hinzugefügt wird. Dabei erfolgt dieses Hinzufügen in der Regel schichtweise. "Additive Herstellverfahren", die in der Fachsprache oft auch als "generative Verfahren" oder allgemein als "3D-Drucken" bezeichnet werden, stehen damit im Gegensatz zu den klassischen subtraktiven Fertigungsverfahren, wie den spanenden Verfahren (z.B. Fräsen, Bohren und Drehen), bei denen Material abgetragen wird, um dem jeweils herzustellenden Bauteil seine Form zu verleihen. Ebenso unterscheiden sich additive Verfahren grundsätzlich von den konventionellen Massivformgebungsverfahren, wie Schmieden und desgleichen, bei denen unter Beibehaltung der Masse aus einem Ausgangs- oder Zwischenprodukt das jeweilige Stahlteil geformt wird.

Das additive Fertigungsprinzip ermöglicht es, geometrisch komplexe Strukturen herzustellen, die mit konventionellen Fertigungsverfahren, wie den schon genannten spanabhebenden Verfahren oder Urformverfahren (Gießen, Schmieden), nicht oder nur aufwendig realisiert werden können (s. VDI Statusreport "Additive Fertigungsverfahren", September 2014, herausgegeben vom Verein Deutscher Ingenieure e.V., Fachbereich Produktionstechnik und Fertigungsverfahren, www.vdi.de/statusadditiv).

Nähere Definitionen der Verfahren, die unter dem Oberbegriff "Additive Verfahren" zusammengefasst sind, finden sich beispielsweise in den VDI-Richtlinien 3404 und 3405.

Bei der additiven Verarbeitung von Metallpulvern zu Bauteilen wird zwischen solchen Verfahren, bei denen die Verfestigung des Metallpulvers durch Wärmezufuhr erfolgt, durch die die Metallpartikel des Pulvers so aufgeschmolzen werden, dass sie stoffschlüssige Verbindungen eingehen, und solchen Verfahren unterschieden, bei denen die Verfestigung mit Hilfe von einem Binder erzielt wird, der mit den Pulverpartikeln vermischt wird, so dass die Partikel nach der Aushärtung in einer festen Matrix gehalten sind.

Die auf Wärmezufuhr basierenden additiven Fertigungsverfahren ermöglichen aufgrund der kurzen Einwirkzeiten der Wärmequelle Abkühlgeschwindigkeit die so hoch sind, dass keine Chromkarbide im erzeugten Bauteil entstehen. Dabei eignen sich austenitische Stahlwerkstoffe der hier in Rede stehenden Art aufgrund dessen, dass sie bei ihrer Erhitzung und Abkühlung keine Phasenumwandlung durchlaufen, besonders gut für die additive Fertigung. Aus diesem Grund hat sich unter anderem der eingangs schon erwähnte Stahl X2CrNiMo17-12-2 (Werkstoffnummer 1.4404) als einer der Standardstähle für die Erzeugung von Metallpulvern für den 3D-Druck etabliert. Allerdings erreicht dieser Stahl im gedruckten Zustand bei Raumtemperatur mechanische Eigenschaften, die für viele Anwendungen unzureichend sind.

Vor dem Hintergrund des voranstehend erläuterten Standes der Technik hat sich die Aufgabe ergeben, ein für die additive Fertigung geeignetes Metallpulver zu schaffen, das die zuverlässige Erzeugung von hochbelastbaren Bauteilen ermöglicht.

Darüber hinaus sollten vorteilhafte Verwendungen des zu schaffenden Metallpulvers angegeben werden.

Ebenso sollte ein Verfahren vorgeschlagen werden, das mit den zu schaffenden Metallpulvern die zuverlässige Erzeugung von Bauteilen mit optimierten mechanischen Eigenschaften auf Basis eines additiven Fertigungsverfahren ermöglicht.

Schließlich sollte ein Bauteil angegeben werden, das, wenn es durch ein additives Fertigungsverfahren hergestellt ist, optimierte mechanische Eigenschaften aufweist.

Ein diese Aufgabe lösendes Metallpulver weist erfindungsgemäß mindestens die in Anspruch 1 angegebenen Merkmale auf.

Ein die voranstehend genannte Aufgabe lösendes Verfahren umfasst erfindungsgemäß mindestens die in Anspruch 7 angegebenen Arbeitsschritte. Dabei versteht es sich von selbst, dass ein Fachmann bei der Durchführung des erfindungsgemäßen Verfahrens und seiner hier erläuterten Varianten und Ausbaumöglichkeiten diejenigen vorliegend nicht explizit erwähnten Arbeitsschritte ergänzt, von denen er aufgrund seiner praktischen Erfahrung weiß, dass sie bei der Durchführung solcher Verfahren regelmäßig angewendet werden.

Schließlich wird die voranstehend genannte Aufgabe erfindungsgemäß auch durch ein Bauteil gelöst, das mindestens die in Anspruch 11 angegebenen Merkmale besitzt und durch ein additives Fertigungsverfahren hergestellt ist. Insbesondere lässt sich ein solches erfindungsgemäßes Bauteil durch Anwendung des erfindungsgemäßen Verfahrens aus erfindungsgemäß beschaffenem Metallpulver herstellen.

Dabei handelt es sich bei den erfindungsgemäßen Bauteilen insbesondere um in der Praxis hochbelastete Maschinenelemente oder um Bauteile zur Verwendung im oder am menschlichen oder tierischen Körper durch ein additives Fertigungsverfahren, für deren Herstellung ein erfindungsgemäßes Metallpulver besonders geeignet ist.

Weitere vorteilhafte Ausgestaltungen der Erfindung sind in den abhängigen Ansprüchen angegeben und werden wie der allgemeine Erfindungsgedanke nachfolgend im Einzelnen erläutert.

Die Bezeichnung "Bauteil zur Verwendung in oder am menschlichen oder tierischen Körper" umfasst hier Implantate, die fest im Körper verbaut werden, wie Schrauben, Schienen, Spangen, Teile von Hüft- oder Kniegelenken, Zahnpfeiler oder andere fest im Kiefer verankerte Zahnimplantate und andere als Ersatz für natürliche Knochen oder Gelenke implantierte Teile, wie auch Prothesen, die vorübergehend oder dauerhaft am Körper befestigt werden, wie Teile der Zahnprothetik (Brücken, Zahnteil- oder -vollersatz) oder Werkzeuge, die insbesondere bei der Behandlung von Zahn- oder allgemeiner Chirurgie benötigt werden. Werkstoffe für Implantate oder Prothesen müssen ausreichend korrosionsbeständig sein und eine optimierte Bioverträglichkeit aufweisen. Sie dürfen folglich im Gebrauch keine schädlichen Auswirkungen auf den Körper haben, in den oder an dem die aus ihnen gefertigten Bauteile eingesetzt werden, und auch keine sonstige Reaktionen auslösen, die einen ungünstigen Einfluss auf das Wohlbefinden oder die Gesundheit haben könnten. Gleichzeitig müssen Implantat- oder Prothesenwerkstoffe eine für den jeweiligen Verwendungszweck ausreichende mechanische Eigenschaft, wie Festigkeit, Zähigkeit und desgleichen, besitzen. Ein Metallpulver, dessen Partikel in der voranstehend angegebenen Weise im Rahmen der erfindungsgemäß vorgegebenen Legierung zusammengesetzt sind, erfüllt dieses Anforderungsprofil optimal und ermöglicht es zudem, durch Anwendung von bekannten 3D-Druckverfahren filigrane und dennoch stabile Bauteile zu fertigen, die den bei ihrem Einsatz im Körper auftretenden Belastungen sicher standhalten. So lassen sich aus erfindungsgemäßem Metallpulver durch additive Fertigung beispielsweise insbesondere Bauteile für allgemeine chirurgische und zahnchirurgische Zwecke, wie Schrauben, Nägel, Bolzen, Teile für Gelenke und desgleichen, aber auch chirurgische Instrumente, wie Operationsbestecke und desgleichen, fertigen.

Gleichzeitig eignet das erfindungsgemäße Metallpulver zur Erzeugung von hoch belastbaren und gleichzeitig hoch korrosionsbeständigen Maschinenelementen, wie beispielsweise Pumpengehäuse oder andere filigran geformte Maschinenbauteile, an deren Formgebung beispielsweise aufgrund spezieller strömungstechnischer Anforderungen besondere Ansprüche gestellt werden und die sich mit konventionellen umformenden, urformenden oder subtraktiven Fertigungsmethoden nicht darstellen lassen. Hier kann insbesondere die starke Neigung zur Kaltverfestigung des erfindungsgemäß eingesetzten Stahlwerkstoffs genutzt werden, um Bauteile zu fertigen, die trotz minimierter Abmessungen in der Praxis hohen Druckspannungen und desgleichen standhalten.

Ein erfindungsgemäßes zur Verwendung in einem additiven Fertigungsverfahren vorgesehenes Metallpulver besteht demnach aus Stahlpartikeln, die

- einen mittleren Durchmesser von 5 - 150 $\mu$m aufweisen und
- aus, in Masse-%,

| | | |
|---|---|---|
| C: | 0,15- | 1,0 % |
| N: | 0,15- | 1,0 %, |
| Si: | 0,1 - | 2,0 %, |
| Mn: | 10 | - 25 %, |
| Cr: | 5 | - 21 %, |
| Mo: | 0,1 | - 3,0 %, |
| Ni: | | $\leq$ 5 %, |

Rest Eisen und unvermeidbaren Verunreinigungen,
bestehen,
- wobei das Metallpulver eine gemäß DIN EN ISO 4490 bestimmte Durchflussrate von weniger als 30 sec/50 g aufweist.

Wie eingangs bereits erläutert, tragen die hohen Gehalte an Kohlenstoff ("C") und Stickstoff ("N") der Stahlpartikel eines erfindungsgemäßen Metallpulvers zur Festigkeit, Kaltverfestigung und Korrosionsbeständigkeit der Bauteile bei, die aus erfindungsgemäßem Metallpulver durch additive Fertigung erzeugt werden. Um dies zu gewährleisten, sieht die Erfindung C- und N-Gehalte vor, die in Summe 0,3 - 2 Masse-% betragen können, wobei der C-Gehalt und der N-Gehalt jeweils 0,15 - 1 Masse-% betragen. Als im Hinblick auf die Festigkeitseigenschaften und das Verarbeitungsverhalten sowie die Korrosionsbeständigkeit für die Praxis besonders vorteilhaft haben sich dabei Gehalte an C oder N von mindestens 0,3 Masse-% erwiesen, wobei C- oder N-Gehalte der Stahlpartikel des Metallpulvers von höchstens 0,7 Masse-% eine besonders vorteilhafte Kombination von hohen Festigkeitswerten, guten Zähigkeitseigenschaften und ebenso guter Bruchdehnung gewährleisten. In Summe sind dementsprechend die Gehalte an C und N der Stahlpartikel eines erfindungsgemäßen Metallpulvers vorteilhafterweise auf 0,6 - 1,4 Masse-% beschränkt.

Die Schmelze, aus denen die Stahlpartikel eines erfindungsgemäßen Metallpulvers erzeugt werden, und damit einhergehend die Stahlpartikel selbst, enthält 0,1 - 2 Masse-% Silizium ("Si"), um bei der Verdüsung der Schmelze zu den Stahlpartikeln den Schmelzpunkt und die Viskosität der Schmelze so einzustellen, dass sich die Schmelze betriebssicher zu den Stahlpartikeln verdüsen lässt. Ebenso wird Si bei der Stahlerzeugung für die Desoxidation der Schmelze benötigt. Besonders eignen sich Si-Gehalte von mindestens 0,15 Masse-%, wobei sich die positiven Einflüsse der Anwesenheit von Si dann besonders effektiv nutzen lassen, wenn der Si-Gehalt höchstens 0,6 Masse-% beträgt.

Mangan ("Mn") ist in den Stahlpartikeln eines erfindungsgemäßen Metallpulvers in Gehalten von 10 - 25 Masse-% enthalten, um zu gewährleisten, dass das Gefüge eines aus erfindungsgemäßem Metallpulver erzeugten Bauteils zumindest überwiegend, vorzugsweise im technischen Sinne vollständig, aus Austenit besteht. Die Gehalte an Mangan sind dabei so eingestellt, dass die austenitische Phase des Gefüges durch die kombinierte Anwesenheit von C, N und Mn nicht nur so stabilisiert wird, dass auch im erstarrten Zustand des Bauteils ausreichende Austenitanteile im Gefüge vorliegen, sondern dass gleichzeitig auch die ferritstabilisierende Wirkung der erfindungsgemäß ebenfalls in der Legierung der Stahlpartikel des Metallpulvers vorgesehenen Gehalte an Chrom ("Cr") ,Molybdän ("Mo") und Silizium (Si) ausgeglichen wird. Mn wird zudem benötigt, um die Stickstofflöslichkeit der Schmelze zu erhöhen. Auf diese Weise lassen sich die erfindungsgemäß vorgesehenen hohen N-Gehalte unter Atmosphärendruck erreichen.

Wesentlich ist dabei, dass erfindungsgemäß die Mn-Gehalte der Stahlpartikel eines erfindungsgemäßen Metallpulvers so bemessen sind, dass trotz des Umstands, dass bei der Erzeugung des Metallpulvers und der additiven Fertigung ein Teil des im Stahl der Stahlpartikel vorhandenen Mn-Gehalts verloren geht, im durch die additive Fertigung erhaltenen Bauteil immer noch ein Austenitgehalt vorliegt, der zur Ausbildung des gewünschten überwiegend, insbesondere vollständig austenitischen Gefüges ausreicht. Hierbei geht die Erfindung von der Erkenntnis aus, dass es im Zuge der additiven Fertigung zu einem Verlust von 0,5 - 2,5 Masse-% Mn kommt, wobei praktische Versuche ergeben haben, dass die eintretenden Mn-Verluste regelmäßig 1,5 $\pm$ 0,5 Masse-% betragen.

Um sicherzustellen, dass das Gefüge eines aus erfindungsgemäßem Metallpulver erzeugten Bauteils im technischen Sinne vollständig austenitisch und damit einhergehend das betreffende Bauteil sicher unmagnetisch ist, kann der Mn-Gehalt des Metallpulvers unter Berücksichtigung des über die additive Fertigung eintretenden Mn-Verlustes so eingestellt werden, dass im erhaltenen Bauteil sicher mehr als 10 Masse-%, insbesondere mehr als 13 Masse-%, an Mn vorhanden sind. Praktische Versuche haben hier gezeigt, dass bei Mn-Gehalten der Stahlpartikel eines erfindungsgemäßen Metallpulvers von mindestens 13 Masse-%, insbesondere mindestens 15 Masse-%, im durch additive Fertigung aus einem erfindungsgemäßen Metallpulver erzeugten Bauteil sicher ein Mn-Gehalt vorliegt, der ein vollständig austenitisches Gefüge gewährleistet. Mn-Gehalte von mindestens 15 Masse-% werden deshalb insbesondere auch dann für die Stahlpartikel eines erfindungsgemäßen Metallpulvers vorgesehen, wenn aus dem Metallpulver durch additive Fertigung Bauteile zur Verwendung im menschlichen oder tierischen Körper erzeugt werden sollen.

Als "vollständig austenitisch" wird erfindungsgemäß ein Gefüge angesehen, bei dem die Summe der Anteile an den neben Austenit im Gefüge des Bauteils technisch bedingt unvermeidbar vorhandenen Gefügebestandteilen höchstens 10 Vol.-% beträgt. Dabei sind die Anteile an den sonstigen Gefügebestandteilen bevorzugt so gering wie möglich zu halten, so dass sie besonders bevorzugt weniger als 5 Vol.-% betragen.

Der Gehalt an Chrom ("Cr") der Stahlpartikel eines erfindungsgemäßen Metallpulvers beträgt 5 - 21 Masse-%, um in Kombination mit einem Gehalt an Molybdän ("Mo") von 0,5 - 3,0 Masse-% eine ausreichende Korrosionsbeständigkeit der aus erfindungsgemäßem Metallpulver durch das jeweilige additive Herstellverfahren gebildeten Bauteils zu gewährleisten. Soll eine für die Herstellung von Bauteilen, die im menschlichen oder tierischen Körper oder in anderen stark korrosiven Umgebungen angewendet werden sollen, ausreichende Korrosionsbeständigkeit gewährleistet werden, so können dazu Cr-Gehalte von mindestens 14 Masse-% in den Stahlpartikeln des Metallpulvers vorgesehen werden.

Nickel ("Ni") kann in den Stahlpartikeln eines erfindungsgemäßen Metallpulvers in Gehalten von bis zu 5 Masse-% vorgesehen sein, wenn aus dem Metallpulver Maschinenelemente hergestellt werden sollen, an deren Zähigkeit besondere Anforderungen gestellt werden. Soll jedoch aus erfindungsgemäßem Metallpulver ein an oder im menschlichen oder tierischen Körper einzusetzendes Bauteil gefertigt werden, so sollte dazu der Ni-Gehalt so gering wie möglich eingestellt, jedenfalls aber auf höchstens 0,1 Masse-% beschränkt werden, so dass trotz der technisch in der Regel herstellungsbedingt unvermeidbaren Anwesenheit von Ni die aus dem erfindungsgemäßen Metallpulver gefertigten Bauteile keine allergische Reaktion auslösen, wenn sie in Kontakt mit einem menschlichen oder tierischen Körper kommen.

Zu den Verunreinigungen der Stahlpartikel eines erfindungsgemäßen Metallpulvers gehören alle hier nicht explizit erwähnten Legierungselemente, die bei der Stahlerzeugung und -verarbeitung unvermeidbar in den Stahl gelangen, deren Gehalte jedoch in jedem Fall so gering sind, dass sie keinen Einfluss auf die Eigenschaften eines in erfindungsgemäßer Weise legierten Stahls haben. Naturgemäß sollten die Gehalte an den Verunreinigungen daher so gering wie möglich gehalten werden. Jedoch sind aus technischwirtschaftlichen Gründen in Summe bis 2 Masse-%, bevorzugt bis zu 1 Masse-%, besonders bevorzugt weniger als 1 Masse-%, Verunreinigungen im Stahl der Stahlpartikel eines erfindungsgemäßen Metallpulvers als hinsichtlich der erfindungsgemäß angestrebten Effekte und Eigenschaften unschädlich zugelassen. Im Fall, dass das erfindungsgemäße Metallpulver zur Herstellung von Bauteilen für die Anwendung am menschlichen oder tierischen Körper vorgesehen ist, sollten neben den Gehalten an Ni auch die Summe der den unerwünschten Verunreinigungen zuzuordnenden Gehalte an den Kadmium ("Cd"), Beryllium ("Be") und Blei ("Pb") auf höchstens 0,02 Masse-% beschränkt sein.

Durch die Maßgabe, dass ein erfindungsgemäßes Metallpulver eine gemäß DIN EN ISO 4490 bestimmte Durchflussrate von weniger als 30 sec/50g aufweisen muss, weist das Metallpulver eine Fließfähigkeit auf, die es für konventionelle 3D-Druckverfahren optimal geeignet macht. Dies gilt insbesondere dann, wenn die Durchflussrate höchstens 20 sec/50g beträgt.

Die Schüttdichte eines erfindungsgemäßen Metallpulvers sollte mindestens 3 $g/cm^3$ aufweisen, um eine optimale Verarbeitbarkeit zu gewährleisten. Für die Praxis besonders geeignete Schüttdichten liegen dabei im Bereich von 3-6 $g/cm^3$.

Den voranstehend dargelegten Erkenntnissen der Erfindung entsprechend umfasst ein erfindungsgemäßes Verfahren zur Herstellung eines Stahlbauteils folgende Arbeitsschritte:

a) Erschmelzen einer Stahlschmelze die aus, in Masse-%,

| | | |
|---|---|---|
| C: | 0,15 - | 1,0 %, |
| N : | 0,15 - | 1,0 %, |
| Si: | 0,1 - | 2,0 %, |
| Cr: | 5 - | 21 %, |
| Mo: | 0,1 - | 3,0 %, |
| Ni: | ≤ | 5%, |

sowie aus Mn
und als Rest aus Eisen und herstellungsbedingt unvermeidbaren Verunreinigungen besteht,
wobei der Mn-Gehalt der Schmelze um 0,5 - 5 % höher ist als der jeweilige Mn-Zielgehalt %Mn_Z des herzustellenden Bauteils, für den gilt: 8 % ≤ Mn_Z ≤ 24 %.

b) Verdüsen der im Arbeitsschritt a) erschmolzenen Schmelze zu einem Metallpulver, wobei von den erhaltenen Stahlpartikeln für die Weiterverarbeitung diejenigen selektiert werden, deren mittlere Korngröße 5 - 150 $\mu$m betragen;

c) Herstellen des Bauteils durch ein additives Fertigungsverfahren, bei dem

c.1) aus mindestens einer Portion des Metallpulvers mindestens ein verfestigter Volumenabschnitt des herzustellenden Bauteils erzeugt wird;

c.2) bedarfsweise eine weitere Portion des Metallpulvers auf den im Arbeitsschritt c.1 verfestigten Volumenabschnitt aufgetragen wird
und

c.3) bedarfsweise die Arbeitsschritte c.1 und c.2 wiederholt werden, bis das herzustellende Bauteil vollständig fertig additiv geformt ist;

d) optionales formgebendes Bearbeiten der Bauteile;
e) optionales abschließendes Wärmebehandeln des erhaltenen Bauteils;
f) optionale mechanische oder thermochemische Randschichtbehandlung des Bauteils.

Das erfindungsgemäße Verfahren legt für den Mn-Gehalt der Schmelze, welche zum erfindungsgemäßen Metallpulver verdüst werden soll, fest, dass der Mn-Gehalt der Schmelze um 2 - 4 Masse-% höher sein soll als der Mn-Gehalt, der im erfindungsgemäß erzeugten Bauteil vorhanden sein soll, damit bei diesem die gewünschten mechanischen Eigenschaften und das ebenso gewünschte, zumindest überwiegend austenitische Gefüge sicher vorliegt.

Die Erfindung geht bei dieser Maßgabe von der Erkenntnis aus, dass es nicht nur, wie schon erwähnt, im Zuge des jeweils angewendeten additiven Fertigungsverfahrens, sondern auch schon beim Verdüsen der Schmelze zu dem Metallpulver zu deutlichen Verlusten an Mn kommt. Diese liegen in der Praxis ebenfalls regelmäßig im Bereich von 1,5 ± 0,5 Masse-%. Indem erfindungsgemäß die Schmelze gegenüber der Legierung des fertigen erfindungsgemäß erzeugten Bauteils mit einem ausreichenden Gehalt an Mn überlegiert wird, werden somit alle Mn-Verluste vorausschauend kompensiert, die über die Erzeugung und Verarbeitung eines erfindungsgemäßen Metallpulvers entstehen können.

Die Herstellung der Stahlpartikel des Metallpulvers erfolgt durch ein geeignetes Verdüsungsverfahren in konventioneller Weise, beispielsweise durch Gas- oder Wasserverdüsen. Erforderlichenfalls werden aus den erhaltenen Pulverpartikeln für die erfindungsgemäße Weiterverarbeitung durch Sieben diejenigen selektiert, die eine geeignete Korngröße besitzen. Hier haben sich Körner mit einem mittleren Durchmesser 5 - 150 $\mu$m als für die erfindungsgemäßen Zwecke geeignet erwiesen.

Abhängig von der Art und Weise wie die Schmelze im Arbeitsschritt b) verdüst wird und wie das additive Fertigungsverfahren durchgeführt wird, kann es aufgrund der geringeren Stickstofflöslichkeit von Metallschmelzen im Zuge der Erzeugung und Verarbeitung eines erfindungsgemäßen Metallpulvers auch zu einem Verlust an N kommen. Die Erfindung berücksichtigt dies dadurch, dass der N-Gehalt der Schmelze so eingestellt wird, dass im fertigen Bauteil jeweils so viel N vorhanden ist, dass die positiven Einflüsse von N auf die Eigenschaften des Bauteils eintreten. Eine zielgenaue Einstellung des N-Gehalts kann dabei dadurch vorgenommen werden, dass der N-Gehalt der Schmelze gegenüber dem N-Zielgehalt des Bauteils, welcher typischerweise im Bereich von 0,15 - 1,0 Masse-% N, insbesondere 0,2 - 0,7 Masse-% N, liegt, um 0,1 - 0,2 Masse-% N überlegiert wird.

Besonders gut lassen sich erfindungsgemäße Metallpulver durch eine Gasverdüsung der erfindungsgemäß legierten Schmelze erzeugen. Hierbei wird vorzugsweise ein gegenüber der Schmelze inertes Gas verwendet, um eine Oxidation der Metallpartikel zu vermeiden. Insbesondere dann, wenn die Verfestigung des Metallpulvers durch Wärmezufuhr erfolgt, können größere N-Verluste bei der additiven Verarbeitung des erfindungsgemäßen Metallpulvers dadurch vermieden werden, dass die Verarbeitung unter einer Schutzgasatmosphäre durchgeführt wird, die beispielsweise aus N oder Argon ("Ar") besteht.

Ebenso können, wenn das Metallpulver durch Gasverdüsen erzeugt werden soll, größere N-Verluste vermieden werden, wenn als Verdüsungsgas N oder Ar verwendet werden. Sowohl bei der additiven Fertigung als auch bei der Gasverdüsung hat sich Stickstoff als Prozessgas besonders bewährt, da bei seiner Verwendung einem Ausgasen von Stickstoff aus dem beim Verdüsen oder beim additiven Fertigen jeweils kurzzeitig schmelzflüssigen Stahl entgegengewirkt wird.

Neuere Entwicklungen haben gezeigt, dass sich aus einer erfindungsgemäß legierten Stahlschmelze alternativ zur Gasverdüsung auch durch konventionelles Wasserverdüsen erfindungsgemäßes Metallpulver erzeugen lässt, das die sich bei seiner Weiterverarbeitung ergebenden Anforderungen erfüllt.

Die mechanischen Eigenschaften eines erfindungsgemäß erzeugten Bauteils können durch eine optional durchgeführte Wärmebehandlung (Arbeitsschritt e)) verbessert werden. Hierzu kann das jeweilige Bauteil über eine Glühdauer von 5 - 120 Minuten bei einer Temperatur von 1000 - 1250 °C gehalten werden, wobei sich Glühdauern von 10 - 30 min und Glühtemperaturen von 1100 - 1150 °C als besonders praxisgerecht herausgestellt haben.

Die Verarbeitung des erfindungsgemäßen Metallpulvers kann bei der erfindungsgemäß absolvierten additiven Fertigung mit aus dem Stand der Technik bekannten und hierzu vorgesehenen 3D-Druckvorrichtungen erfolgen. So kann das erfindungsgemäß verarbeitete Metallpulver bei der additiven Fertigung durch Wärmezufuhr verfestigt werden, indem im Arbeitsschritt c.1) mindestens eine erste Portion volumenabschnittsweise einer zeitlich begrenzten Wärmezufuhr mit anschließender Abkühlung ausgesetzt wird, so dass die Stahlpartikel des Metallpulvers, die im erwärmten Volumenabschnitt vorhanden sind und jeweils aneinander angrenzen, eine stoffschlüssige Verbindung eingehen und nach der Abkühlung zu dem jeweiligen Volumenabschnitt des herzustellenden Bauteils verfestigt werden. Versuche haben hierbei gezeigt, dass sich gute Arbeitserfolge sicher einstellen, wenn im Arbeitsschritt c.1) als Wärmequelle ein Laserstrahl eingesetzt wird, der mit einer Energiedichte von 30 - 90 J/mm$^3$ auf den jeweils zu erhitzenden Volumenabschnitt gerichtet wird.

Alternativ ist es jedoch auch möglich, die additive Fertigung als sogenanntes "Binder jetting" durchzuführen, bei dem die Pulverpartikel durch einen geeigneten Binder miteinander verklebt werden, um das feste Bauteil zu formen (s. https://de.wikipedia.org/wiki/Binder_Jetting, Auffindedatum 16. Januar 2020).

Ebenfalls den voranstehenden Erläuterungen entsprechend zeichnet sich ein erfindungsgemäßes Bauteil dadurch aus, dass es

- durch ein additives Fertigungsverfahren hergestellt ist,

- aus, in Masse-%, 0,15 - 1,0 % C, 0,15 - 1,0 % N , 0,1 - 2,0 % Si, 8 - 24 % Mn, 5 - 21 % Cr, 0,15 - 3,0 % Mo, $\leq$ 5 % Ni und als Rest aus Eisen und unvermeidbaren Verunreinigungen besteht, und

- ein zu mehr als 50 Vol.-% aus Austenit, zu höchstens 49 Vol.-% aus Ferrit und als Rest aus Ferrit und anderen herstellungsbedingt unvermeidbaren Gefügebestandteilen bestehendes Gefüge aufweist, wobei der Anteil der unvermeidbaren Gefügebestandteile am Gefüge des Bauteils höchstens 30 Vol.-% beträgt.

Im Fall, dass aus einem erfindungsgemäßen Metallpulver Maschinenelemente, wie Pumpengehäuse und vergleichbar filigran geformte Bauteile für Maschinen, Fahrzeugkarosserien oder Fahrzeugfahrwerke, gefertigt werden sollen, kann es in vielen Anwendungsfällen ausreichen, wenn das Gefüge des jeweils erzeugten Bauteils zum überwiegenden Teil, d.h. zu jeweils mehr als 50 Vol.-%, insbesondere mehr als 60 Vol.-% oder mindestens 80 Vol.-% aus Austenit besteht, während der Rest des Gefüges durch Ferrit sowie bis zu 30 Vol.-% unvermeidbare andere Gefügebestandteile eingenommen wird. Zu den bis zu 30 Vol.-% des Gefüges einnehmenden unvermeidbaren anderen Bestandteilen gehören Chromkarbide, Chromnitride und Sigma-Phase. Vorzugsweise ist der Anteil der übrigen, herstellungsbedingt unvermeidbaren Bestandteile auf höchstens 20 Vol.-%, insbesondere höchstens 15 Vol.-% oder, besonders bevorzugt, bis zu 5 Vol.-% beschränkt, um optimierte mechanische Eigenschaften des Bauteils zu erzielen.

Beträgt der Ferrit-Anteil im Gefüge eines erfindungsgemäßen Bauteils bis zu 15 Vol.-%, insbesondere bis zu 10 Vol.-%, so kann dies zu verbesserten Zähigkeitseigenschaften bei gleichbleibend hohen Festigkeitswerten beitragen. Diese Eigenschaftskombination kann von besonderem Interesse sein, wenn ein erfindungsgemäßes Bauteil im praktischen Einsatz hohen wechselnden Belastungen ausgesetzt ist oder in der Lage sein soll, hohe dynamische Kräfte aufzunehmen, wie es bei crashrelevanten Bauelementen von Fahrzeugkarosserien oder -fahrwerken der Fall ist.

Soll ein erfindungsgemäß beschaffenes Bauteil dagegen für medizinische Zwecke eingesetzt werden, so hat es sich als besonders vorteilhaft erwiesen, wenn der Austenitanteil des Gefüges mindestens 95 Vol.-%, insbesondere mindestens 98 Vol.-%, beträgt, so dass das Bauteil sicher amagnetisch ist.

Erfindungsgemäße Bauteile weisen im nicht wärmebehandelten Zustand regelmäßig eine Zugfestigkeit Rm von mindestens 650 MPa und eine Streckgrenze Rp von mindestens 650 MPa auf. Darüber hinaus erreichen sie in diesem Zustand im Kerbschlagversuch eine Kerbschlagarbeit von mindestens 30 J und eine Kerbschlagzähigkeit von mindestens 50 J/cm3, wobei in der Praxis regelmäßig eine Kerbschlagarbeit von mindestens 40 J und eine Kerbschlagzähigkeit von mindestens 60 J/cm3 erreicht werden. Die an der freien Oberfläche des erfindungsgemäßen Bauteils gemessene Oberflächenhärte im ungehärteten Zustand beträgt dabei typischerweise mindestens 200 HV, insbesondere mindestens 250 HV. Die Bruchdehnung A5,65 erfindungsgemäßer Bauteile im nicht wärmebehandelten Zustand liegt regelmäßig bei mindestens 15 %.

Wie schon erwähnt, lassen sich durch die optional vorgesehene Wärmebehandlung die mechanischen Eigenschaften eines erfindungsgemäß erzeugten Bauteils weiter steigern. So erreichen sie im Kerbschlagversuch eine Kerbschlagarbeit von mindestens 100 J und eine Kerbschlagzähigkeit von mindestens 120 J/cm$^3$. Die an der freien Oberfläche des erfindungsgemäßen Bauteils gemessene Oberflächenhärte beträgt dabei typischerweise mindestens 200 HV ohne eine Randschichthärtung.

In diesem Zusammenhang ist es bekannt, dass die mechanischen Eigenschaften von durch ein additives Fertigungsverfahren der hier in Rede stehenden Art gefertigten Bauteilen eine Anisotropie aufweisen. Bei den voranstehend angegebenen Grenzwerten handelt es sich daher jeweils um diejenigen Werte, die von den betreffenden mechanischen Eigenschaften unabhängig davon eingehalten werden müssen, ob sie in horizontaler oder in vertikaler Richtung des jeweiligen Bauteils ermittelt werden. Als "vertikale" Baurichtung ist hier die Erstreckung des Bauteils in der Richtung gemeint, in der bei der additiven Fertigung der schichtweise Aufbau des Bauteils erfolgt, wogegen mit der "horizontalen" Baurichtung die quer dazu ausgerichtete Erstreckung des Bauteils bezeichnet ist.

Aufgrund der Zusammensetzung der Stahlpartikel eines erfindungsgemäßen Metallpulvers ist es möglich, die in erfindungsgemäßer Weise vorgestellten Legierungen einer dem 3D-Druckprozess angeschlossenen, in konventioneller Weise durchgeführten Oberflächenhärtung, die sich insbesondere durch Plasmanitrieren bewirken lässt, zu unterziehen. Der hohe Chromgehalt in den Legierungen führt zu der Ausbildung einer Chromkarbid- oder Chromnitridschicht und einer damit einhergehenden Härtesteigerung in oberflächennahen Bereichen.

Diese Eigenschaften sind insbesondere bei Bauteilen, die einer dynamischen Belastung oder Verschleiß unterliegen, sehr vorteilhaft.

Bei einer in der Praxis für die Herstellung von Maschinenelementen besonders geeigneten Variante des erfindungsgemäßen Metallpulvers bestehen dessen Stahlpartikel aus, in Masse-%, 0,35 - 0,45 % C, 0,55 - 0,65 % N, 0,2 - 0,3 % Si, 20,0 - 21,0 % Mn, 17,5 - 18,5 % Cr, 1,9 - 2,1 %Mo, bis zu 1,0 % Ni und als Rest aus Eisen und bis zu 1,0 Masse-% unvermeidbaren Verunreinigungen, wobei zu den Verunreinigungen, die an sich unerwünschten Gehalte von ≤ 0,02 % P, ≤ 0,02 % S, ≤ 0,05 % Nb, ≤ 0,05 % W, ≤ 0,05 % V≤ 0,1 % O, ≤ 0,01 % B und ≤ 0,1 % Al gehören.

Eine in der Praxis für die Herstellung von Bauteilen für die Anwendung an oder im menschlichen oder tierischen Körper besonders geeignete Variante des Stahl der Stahlpartikel eines erfindungsgemäßen Metallpulvers unterscheidet sich von der im voranstehenden Absatz angegebenen Legierung nur dadurch, dass der Ni-Gehalt auf höchstens 0,1 Masse-%, bevorzugt weniger als 0,1 Masse-%, beschränkt ist.

Nachfolgend wird die Erfindung anhand von Ausführungsbeispielen näher erläutert.

Zur Erprobung der Eigenschaften von erfindungsgemäßen Metallpulvern und daraus durch additive Fertigung hergestellte Bauteile sind in einer ersten Versuchsreihe neun Schmelzen M1 - M9 erzeugt worden, deren Zusammensetzung in Tabelle 1 angegeben ist.

Aufgrund ihrer minimierten Ni-Gehalte sind die Schmelzen M1 - M9 für die Erzeugung der Stahlpartikel von Metallpulvern geeignet, die zur Herstellung von Bauteilen verwendet werden, welche für die Verwendung am menschlichen oder tierischen Körper bestimmt sind.

Die Schmelzen M1 - M9 sind in konventioneller Weise mit einer hierzu im Stand der Technik etablierten Verdüsungseinrichtung zu Stahlpartikeln gasverdüst worden. Als Verdüsungsgas ist Stickstoff eingesetzt worden.

Aus den durch das Verdüsen erhaltenen Stahlpartikeln sind durch Sieben und Windsichten diejenigen Partikel selektiert worden, deren mittlere Korngröße 10 $\mu$m bis 53 $\mu$m betrug. Die gemäß DIN EN ISO 4490 bestimmte Durchflussrate der so selektierten Stahlpartikel lag bei $\leq$ 18 s/50g.

Im weiteren Schritt wurden die erzeugten Metallpulver mit einer konventionellen 3D-Druckvorrichtung (3D-Drucker des Typs M290, s. https://www.eos.info/eosm-290, aufgerufen am 19. Dezember 2019) verarbeitet. Die Metallpulver konnten ohne Probleme verarbeitet werden und die erzeugten Bauteile wiesen ein dichtes Gefüge, frei von Poren oder Rissen auf. Insgesamt konnte gezeigt werden, dass aus den Metallpulvern in einem Energiedichtebereich von 30 - 90 J/mm$^3$ betriebssicher Bauteile erzeugt werden konnten.

Als Prozessgas wurden bei einigen der 3D-Druckversuche Argon und bei anderen Stickstoff verwendet. Beide Prozessgase führten zu gleichbleibend guten Ergebnissen.

Eine Phasenanalyse der gedruckten Bauteile mittels Röntgendiffraktometrie ergab, dass keine Chromkarbide oder andere Ausscheidungen vorlagen, die die Korrosionseigenschaften negativ beeinflussen könnten.

Die gedruckten Bauteile wiesen jeweils ein vollständig austenitisches Gefüge (Austenitanteil $\geq$ 99 Vol.-%) auf.

Ebenso wurden die Zugfestigkeiten Rm, die Streckgrenzen Rp, die Kerbschlagarbeiten, die Kerbschlagzähigkeiten und die Vickershärten der gedruckten Bauteile in konventioneller Weise normgerecht ermittelt.

In Tabelle 2 sind die Bereiche eingetragen, in denen die betreffenden Kennwerte lagen, die für die Bauteile, die aus den Schmelzen M1 - M9 erzeugten Metallpulver gedruckt worden sind, in horizontaler Baurichtung der Bauteile ermittelt worden sind.

In Tabelle 3 sind die Bereiche eingetragen, in denen die betreffenden Kennwerte lagen, die für die Bauteile, die aus den Schmelzen M1 - M9 erzeugten Metallpulver gedruckt worden sind, in vertikaler Baurichtung der Bauteile ermittelt worden sind.

Zusätzlich sind in den Tabellen 2 und 3 die aus der Fachliteratur (s. https://www.fabb-it.de/files/datenblaetter/edelstahl.pdf, Auffindedatum 16. Januar 2020) bekannten korrespondierenden Kennwerte des Referenzwerkstoffes 316L - soweit verfügbar - verzeichnet, dessen Zusammensetzung ebenfalls in Tabelle 1 angegeben ist.

Die Versuche zeigen, dass die mechanischen Eigenschaften der aus den erfindungsgemäßen Metallpulvern gedruckten, nicht wärmebehandelten Bauteile nicht nur den mechanischen Eigenschaften der aus dem konventionellen Werkstoff 316L erzeugten Bauteile überlegen sind, sondern dass hohe C- und N-Gehalte zu deutlich verbesserten mechanischen Eigenschaften der erfindungsgemäß erzeugten Bauteile führen.

Für eine zweite Versuchsreihe ist eine weitere Schmelze erschmolzen und in der voranstehend für die Schmelzen M1 - M9 erläuterten Weise ebenfalls zu Stahlpartikeln verdüst worden. Die Zusammensetzung M10 der erhaltenen Stahlpartikel ist in Tabelle 4 angegeben. Aus den Stahlpartikeln sind diejenigen durch Sieben selektiert worden, deren mittlerer Korndurchmesser 10 - 53 $\mu$m betrug. Die Durchflussrate des so erhaltenen Metallpulvers betrug 16,8 s/50gr bei einer Schüttdichte von 4,23 g/cm$^3$.

Aus dem durch die Stahlpartikel gebildeten Metallpulver sind mit dem schon erwähnten 3D-Drucker M290 zwanzig Bauteile gedruckt worden. Als Schutzgas wurde hierbei Stickstoff eingesetzt. Der Druck der Bauteile erfolgte mit einer Schichtstärke von 40 $\mu$m pro Schicht.

An den zwanzig Bauteilen sind im nicht wärmebehandelten Zustand jeweils die Dichte, die Vickershärte HV, die Kerbschlagarbeit, die Streckgrenze Rp, die Zugfestigkeit Rm, die Bruchdehnung A5,65 normgemäß in vertikaler Baurichtung untersucht worden. Die Mittelwerte der Ergebnisse dieser Untersuchungen ist in Tabelle 5 zusammengefasst und den korrespondierenden, der oben bereits erwähnten Literaturstelle entnommenen Kennwerten eines aus dem konventionellen Stahl 316L gedruckten Bauteils gegenübergestellt. Es zeigt sich auch hier eine deutliche Überlegenheit des erfindungsgemäß beschaffenen und verarbeiteten Werkstoffs.

Zusätzlich sind die Zusammensetzung und das Gefüge der aus dem erfindungsgemäßen, durch die Stahlpartikel M10 gebildeten Metallpulver gedruckten Bauteile untersucht worden. Dabei zeigte sich, dass durch das angewendete 3D-Druckverfahren ein deutlicher Verlust an Mn und N eingetreten ist. So lag der Mn-Gehalt der Bauteile im Mittel um ca. 8 % niedriger als der Mn-Gehalt der Stahlpartikel des Metallpulvers. Genauso ist der N-Gehalt der Bauteile über das 3D-Druckverfahren im Mittel um ca. 12 % zurückgegangen. Jedoch reichte der in den Bauteilen verbliebene Mn- und N-Gehalt aus, um die Ausprägung eines vollständig austenitischen Gefüges (Austenitanteil > 99 Vol.-%) in den Bauteilen zu gewährleisten.

Schließlich ist an einem der aus Metallpulver mit den erfindungsgemäß entsprechend der Legierung M10 zusammengesetzten Stahlpartikeln gedruckten Bauteil und zum Vergleich an einem aus einem konventionellen Metallpulver, dessen Stahlpartikel aus dem Stahl 316L bestanden, gedruckten Bauteil jeweils ein Korrosionstest gemäß SEP 1877 Verfahren II durchgeführt worden. Mit diesem Test wird die Beständigkeit von hochlegierten korrosionsbeständigen Werkstoffen gegen interkristalline Korrosion geprüft. Beide Bauteile haben den Test bestanden und waren somit beständig gegen interkristalline Korrosion.

Des Weiteren sind die aus dem erfindungsgemäßen Metallpulver und dem zum Vergleich herangezogenen, aus dem Stahl 316L gedruckten Bauteile einem Lochkorrosionstest gemäß ASTM G48, Methode E, unterzogen worden. Es zeigte sich auch hier, dass die aus dem erfindungsgemäßen Metallpulver erzeugten Bauteile eine Beständigkeit gegen Lochfraß aufwiesen, die mindestens gleich der aus dem konventionellen, zum Vergleich herangezogenen gedruckten Metallpulver war.

Schließlich sind die aus dem erfindungsgemäßen Metallpulver mit den entsprechend der Legierung M10 zusammengesetzten Stahlpartikeln gedruckten Bauteile einer Wärmebehandlung unterzogen worden, bei der sie über eine Glühdauer von 30 min auf eine Temperatur von 1125 °C durcherwärmt und anschließend mit Wasser abgeschreckt worden sind. An den so wärmebehandelten Bauteilen ist in normgemäßer Weise die Kerbschlagarbeit ermittelt worden. Diese betrug im Mittel 129 $\pm$ 2 J, was etwa dem 2,4-fachen der Kerbschlagarbeit von 52 $\pm$ 3 J entspricht, die von dem nicht wärmebehandelten Zustand im normgemäßen Kerbschlagversuch im Mittel erreicht worden ist.

Tabelle 1

| Pulver | C+N | C | N | Si | Mn | Cr | Mo | Ni |
|---|---|---|---|---|---|---|---|---|
| M1 | 0,6 | 0,3 | 0,3 | 0,1 | 15,0 | 14 | 0,5 | ≤0,1 |
| M2 | 0,7 | 0,3 | 0,4 | 0,2 | 16,0 | 15 | 1,0 | ≤0,1 |
| M3 | 0,8 | 0,3 | 0,5 | 0,3 | 17,0 | 16 | 1,5 | ≤0,1 |
| M4 | 0,9 | 0,4 | 0,5 | 0,4 | 18,0 | 17 | 2,0 | ≤0,1 |
| M5 | 1,0 | 0,4 | 0,6 | 0,5 | 19,0 | 18 | 2,5 | ≤0,1 |
| M6 | 1,1 | 0,5 | 0,6 | 0,6 | 20,0 | 19 | 3,0 | ≤0,1 |
| M7 | 1,2 | 0,5 | 0,7 | 0,1 | 21,0 | 20 | 3,0 | ≤0,1 |
| M8 | 1,3 | 0,6 | 0,7 | 0,15 | 22,0 | 21 | 3,0 | ≤0,1 |
| M9 | 1,4 | 0,7 | 0,7 | 0,2 | 23,0 | 21 | 3,0 | ≤0,1 |
| 316L | - | <0,03 | <0,1 | <0,75 | <2,0 | 18 | 2,7 | 14 |
| Angaben in Masse-%, Rest Fe und unvermeidbare Verunreinigungen | | | | | | | | |

Tabelle 2

| Stahl | Härte | Kerbschlagarbeit | Kerbschlagzähigkeit | Rp | Rm |
|---|---|---|---|---|---|
| | [HV] | [J] | [J/cm$^3$] | [MPa] | [MPa] |
| M1 ... M9 | 250-450 | 30-120 | 50 - 150 | 650 - 1100 | 650 - 1300 |
| 316L | 162 | n.b. | n.b. | 530 $\pm$ 60 | 640 $\pm$ 50 |
| n.b. = nicht bestimmt, | | | | | |

Tabelle 3

| Stahl | Härte | Kerbschlagarbeit | Kerbschlagzähigkeit | Rp | Rm |
|---|---|---|---|---|---|
| | [HV] | [J] | [J/cm$^3$] | [MPa] | [MPa] |
| M1 ... M9 | 250 - 450 | 30-120 | 50 - 150 | 650 - 1200 | 650 - 1300 |
| 316L | 162 | 166 $\pm$ 12 | 132 | 470 $\pm$ 90 | 540 $\pm$ 55 |

Tabelle 4

| | C+N | C | N | Si | Mn | Cr | Mo | Ni |
|---|---|---|---|---|---|---|---|---|
| Pulver | 0,942 | 0,39 | 0,552 | 0,22 | 18,4 | 19,2 | 2,25 | 0,1 |

(fortgesetzt)

|  | C+N | C | N | Si | Mn | Cr | Mo | Ni |
|---|---|---|---|---|---|---|---|---|
| Bauteil | 0,861 | 0,38 | 0,481 | 0,25 | 16,9 | 19,2 | 2,35 | 0,1 |
| Legierung M10, Angaben in Masse-%, Rest Fe und Verunreinigung |||||||||

Tabelle 5

| Stahl | Dichte | Härte | Kerbschlagarbeit | Rp | Rm | A 5,65 |
|---|---|---|---|---|---|---|
|  | [g/cm$^3$] | [HV] | [J] | [MPa] | [MPa] | [%] |
| M10 | 7,78 | 350 ± 4 | 52 ± 3 | 915 ± 11 | 1120 ± 9 | 30 ± 2 |
| 316L | 7,92 | 162 | 50 ± 10 | 470 ± 90 | 540 ± 55 | 45 ±1 |

**Patentansprüche**

1. Metallpulver zur Verwendung in einem additiven Fertigungsverfahren und bestehend aus Stahlpartikeln, die

    - einen mittleren Durchmesser von 5 - 150 μm aufweisen und
    - aus, in Masse-%,

| C: | 0,15 - | 1,0 % |
|---|---|---|
| N: | 0,15 - | 1,0 %, |
| Si: | 0,1 - | 2,0 %, |
| Mn: | 10 - | 25 %, |
| Cr: | 5 - | 21 %, |
| Mo: | 0,1 - | 3,0 %, |
| Ni: | ≤ | 5 %, |

    Rest Eisen und unvermeidbaren Verunreinigungen, bestehen,

    - wobei das Metallpulver eine gemäß DIN EN ISO 4490 bestimmte Durchflussrate von weniger als 30 sec/50 g aufweist.

2. Metallpulver nach Anspruch 1, **dadurch gekennzeichnet, dass** der Mn-Gehalt seiner Stahlpartikel mindestens 15 Masse-% beträgt.

3. Metallpulver nach einem der voranstehenden Ansprüche, **dadurch gekennzeichnet, dass** der Cr-Gehalt seiner Stahlpartikel mindestens 14 Masse-% beträgt.

4. Metallpulver nach einem der voranstehenden Ansprüche, **dadurch gekennzeichnet, dass** der Ni-Gehalt seiner Stahlpartikel höchstens 0,1 Masse-% beträgt.

5. Metallpulver nach einem der voranstehenden Ansprüche, **dadurch gekennzeichnet, dass** die Summe der Gehalte an Cund N seiner Stahlpartikel 0,6 - 1,5 Masse-% beträgt.

6. Verwendung eines gemäß den Ansprüchen 2, 3 und 4 beschaffenen Metallpulvers für die additive Fertigung von Bauteilen zur Verwendung im oder am menschlichen oder tierischen Körper.

7. Verfahren zur Herstellung eines Stahlbauteils umfassend folgende Arbeitsschritte:

    a) Erschmelzen einer Stahlschmelze die aus, in Masse-%,

| C: | 0,15 - | 1,0 %, |
|---|---|---|
| N : | 0,15 - | 1,0 %, |
| Si: | 0,1 - | 2,0 %, |
| Cr: | - | 21 %, |
| Mo: | 0,1 - | 3,0 %, |
| Ni: | $\leq$ | 5%, |

sowie aus Mn und als Rest aus Eisen und herstellungsbedingt unvermeidbaren Verunreinigungen besteht,
wobei der Mn-Gehalt der Schmelze um 0,5 - 5 % höher ist als der jeweilige Mn-Zielgehalt %Mn_Z des herzustellenden Bauteils, für den gilt: 8 % $\leq$ Mn_Z $\leq$ 24 %.

b) Verdüsen der im Arbeitsschritt a) erschmolzenen Schmelze zu einem Metallpulver, wobei von den erhaltenen Stahlpartikeln für die Weiterverarbeitung diejenigen selektiert werden, deren mittlere Korngröße 5 - 150 $\mu$m betragen;

c) Herstellen des Bauteils durch ein additives Fertigungsverfahren, bei dem

c.1) aus mindestens einer Portion des Metallpulvers mindestens ein verfestigter Volumenabschnitt des herzustellenden Bauteils erzeugt wird;

c.2) bedarfsweise eine weitere Portion des Metallpulvers auf den im Arbeitsschritt c.1 verfestigten Volumenabschnitt aufgetragen wird

und

c.3) bedarfsweise die Arbeitsschritte c.1 und c.2 wiederholt werden, bis das herzustellende Bauteil vollständig fertig additiv geformt ist;

d) optionales formgebendes Bearbeiten der Bauteile;

e) optionales abschließendes Wärmebehandeln des erhaltenen Bauteils;

f) optionale mechanische oder thermochemische Randschichtbehandlung des Bauteils.

**8.** Verfahren nach Anspruch 7, **dadurch gekennzeichnet, dass** das Bauteil bei der optional durchgeführten Wärmebehandlung (Arbeitsschritt e)) über eine Dauer von 5 min - 120 min bei einer Temperatur von 1000 - 1250 °C gehalten wird.

**9.** Verfahren nach einem der Ansprüche 7 oder 8, **dadurch gekennzeichnet, dass** die Verdüsung der Schmelze im Arbeitsschritt b) als Gasverdüsung durchgeführt wird.

**10.** Verfahren nach einem der Ansprüche 7 - 9, **dadurch gekennzeichnet, dass** im Arbeitsschritt c.1) als Wärmequelle ein Laserstrahl eingesetzt wird, der mit einer Energiedichte von 20 - 110 J/mm$^3$ auf den jeweils zu erhitzenden Volumenabschnitt gerichtet wird.

**11.** Bauteil, das

- durch ein additives Fertigungsverfahren hergestellt ist,
- aus, in Masse-%, 0,15 - 1,0 % C, 0,15 - 1,0 % N , 0,1 - 2,0 % Si, 8 - 24 % Mn, 5 - 21 % Cr, 0,15 - 3,0 % Mo, $\leq$ 5 % Ni und als Rest aus Eisen und unvermeidbaren Verunreinigungen besteht, und
- ein zu mehr als 50 Vol.-% aus Austenit, zu höchstens 49 Vol.-% aus Ferrit und als Rest aus Ferrit und anderen herstellungsbedingt unvermeidbaren Gefügebestandteilen bestehendes Gefüge aufweist, wobei der Anteil der unvermeidbaren Gefügebestandteile am Gefüge des Bauteils höchstens 30 Vol.-% beträgt.

**12.** Bauteil nach Anspruch 11, **dadurch gekennzeichnet, dass** es im nicht wärmebehandelten Zustand eine Zugfestigkeit Rm von mindestens 650 MPa und eine Streckgrenze Rp von mindestens 650 MPa aufweist sowie im Kerbschlagversuch eine Kerbschlagarbeit von mindestens 30 J und eine Kerbschlagzähigkeit von mindestens 50 J/cm$^3$ erreicht.

**13.** Bauteil nach Anspruch 12, **dadurch gekennzeichnet, dass** seine Oberflächenhärte mindestens 250 HV beträgt.

**14.** Bauteil nach einem der Ansprüche 11 oder 12, **dadurch gekennzeichnet, dass** es im wärmebehandelten Zustand im Kerbschlagversuch eine Kerbschlagarbeit von mindestens 100 J und eine Kerbschlagzähigkeit von mindestens 120 J/cm$^3$ erreicht.

**15.** Bauteil nach Anspruch 14, **dadurch gekennzeichnet, dass** seine Oberflächenhärte mindestens 200 HV beträgt.

Europäisches
Patentamt

European
Patent Office

Office européen
des brevets

**EUROPÄISCHER RECHERCHENBERICHT**

Nummer der Anmeldung

EP 20 15 2725

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | ZUMSANDE K ET AL: "Characterization of the surface of Fe 19Mn 18Cr C N during heat treatment in a high vacuum An XPS study", MATERIALS CHARACTERIZATION, ELSEVIER, NEW YORK, NY, US, Bd. 71, 7. Juni 2012 (2012-06-07), Seiten 66-76, XP028411658, ISSN: 1044-5803, DOI: 10.1016/J.MATCHAR.2012.06.002 [gefunden am 2012-06-15] | 11 | INV. C22C38/00 B22F3/105 B22F3/24 B22F5/00 B22F9/08 B33Y10/00 B33Y40/20 B33Y70/00 B33Y80/00 C22C38/02 |
| A | * Tabelle 1 * * Seite 67, rechte Spalte, Abschnitt "Experimental" * ----- | 1-10, 12-15 | C22C38/22 C22C38/38 C22C38/44 C22C38/58 |
| X | EP 2 617 839 A1 (MEKO LASERSTRAHL MATERIALBEARBEITUNGEN E K [DE]) 24. Juli 2013 (2013-07-24) | 11 | |
| A | * Ansprüche 1, 8 * ----- | 1-10, 12-15 | |
| A | Kirk Othmer: "Size measurements of particles" In: "Encyclopedia of Chemical Technology, Vol 22", 1. Januar 1997 (1997-01-01), XP055661116, Seiten 256-278, * das ganze Dokument * ----- -/-- | 1-15 | RECHERCHIERTE SACHGEBIETE (IPC) C22C B22F B33Y |

Der vorliegende Recherchenbericht wurde für alle Patentansprüche erstellt

| Recherchenort | Abschlußdatum der Recherche | Prüfer |
|---|---|---|
| Den Haag | 23. Juni 2020 | Pircher, Ernst |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 1 von 3

EP 3 851 551 A1

**EUROPÄISCHER RECHERCHENBERICHT**

Europäisches Patentamt
European Patent Office
Office européen des brevets

Nummer der Anmeldung

EP 20 15 2725

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | RENLIANG XU ET AL: "Comparison of sizing small particles using different technologies", POWDER TECHNOLOGY - ELECTROSTATIC PHENOMENA IN PARTICULATE PROCESSES, ELSEVIER, BASEL (CH), Bd. 132, Nr. 2-3, 24. Juni 2003 (2003-06-24), Seiten 145-153, XP002711749, ISSN: 0032-5910, DOI: 10.1016/S0032-5910(03)00048-2 * Tabelle 6 * ----- | 1-15 | |
| A | CN 110 295 308 A (GOERTEK INC) 1. Oktober 2019 (2019-10-01) * das ganze Dokument * ----- | 1-15 | |
| A | CH 688 914 A5 (BASF AG [DE]) 29. Mai 1998 (1998-05-29) * das ganze Dokument * ----- | 1-15 | |
| A | CN 101 353 768 A (UNIV BEIJING SCIENCE & TECH [CN]) 28. Januar 2009 (2009-01-28) * das ganze Dokument * ----- | 1-15 | RECHERCHIERTE SACHGEBIETE (IPC) |
| A | CN 106 939 395 A (UNIV SOUTH CHINA TECH) 11. Juli 2017 (2017-07-11) * das ganze Dokument * ----- | 1-15 | |
| A | DE 198 55 422 A1 (BASF AG [DE]) 8. Juni 2000 (2000-06-08) * das ganze Dokument * ----- | 1-15 | |
| | -/-- | | |

Der vorliegende Recherchenbericht wurde für alle Patentansprüche erstellt

| Recherchenort | Abschlußdatum der Recherche | Prüfer |
|---|---|---|
| Den Haag | 23. Juni 2020 | Pircher, Ernst |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

Seite 2 von 3

Europäisches
Patentamt

European
Patent Office

Office européen
des brevets

# EUROPÄISCHER RECHERCHENBERICHT

Nummer der Anmeldung

EP 20 15 2725

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SHANINA B D ET AL: "CONCEPT OF A NEW HIGH-STRENGTH AUSTENITIC STAINLESS STEEL//KONZEPT EINES NEUEN HOCHFESTEN AUSTENITISCHEN NICHTROSTENDEN STAHLES", STEEL RESEARCH, DUESSELDORF, DE, Bd. 73, Nr. 3, 1. März 2002 (2002-03-01), Seiten 105-113, XP008045706, ISSN: 0177-4832 * das ganze Dokument * ----- | 1-15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 23. Juni 2020 | Pircher, Ernst |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 15 2725

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2020

| Im Recherchenbericht angeführtes Patentdokument | Datum der Veröffentlichung | Mitglied(er) der Patentfamilie | Datum der Veröffentlichung |
|---|---|---|---|
| EP 2617839 A1 | 24-07-2013 | BR 112014016071 A2<br>CN 104093862 A<br>EP 2617839 A1<br>EP 2804963 A1<br>ES 2606588 T3<br>US 2014364960 A1<br>WO 2013107730 A1 | 13-06-2017<br>08-10-2014<br>24-07-2013<br>26-11-2014<br>24-03-2017<br>11-12-2014<br>25-07-2013 |
| CN 110295308 A | 01-10-2019 | KEINE | |
| CH 688914 A5 | 29-05-1998 | KEINE | |
| CN 101353768 A | 28-01-2009 | KEINE | |
| CN 106939395 A | 11-07-2017 | KEINE | |
| DE 19855422 A1 | 08-06-2000 | AU 1860100 A<br>CN 1333839 A<br>DE 19855422 A1<br>EP 1144702 A1<br>IL 143348 A<br>JP 2002531693 A<br>KR 20010080641 A<br>TW 509726 B<br>US 6641640 B1<br>WO 0032828 A1 | 19-06-2000<br>30-01-2002<br>08-06-2000<br>17-10-2001<br>27-09-2004<br>24-09-2002<br>22-08-2001<br>11-11-2002<br>04-11-2003<br>08-06-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10146616 A1

- EP 1196642 B1

**In der Beschreibung aufgeführte Nicht-Patentliteratur**

- **K. ZUSMANDE et al.** Characterization of the surface of Fe-19Mn-18Cr-C-N during heat treatment in a high vacuum - An XPS study. *Materials Characterization,* 2012, vol. 71, 66-76

- **E. HRYHA et al.** Surface Oxide Transformation during HIP of Austenitic Fe-19Mn-18Cr-C-N PM steel. *Proceedings of 11-th International Conference on Hot Isostatic Pressing,* 09. Juni 2014
- Additive Fertigungsverfahren. Fachbereich Produktionstechnik und Fertigungsverfahren, September 2014